**Europäisches Patentamt**

**European Patent Office**

**Office européen des brevets**

(11) Veröffentlichungsnummer: **0 027 933**
**A1**

## (12) EUROPÄISCHE PATENTANMELDUNG

(21) Anmeldenummer: **80106131.8**

(22) Anmeldetag: **09.10.80**

(51) Int. Cl.³: **G 05 D 23/02**

(30) Priorität: **12.10.79 DE 2941343**

(43) Veröffentlichungstag der Anmeldung: **06.05.81**
**Patentblatt 81/18**

(84) Benannte Vertragsstaaten: **AT BE CH FR GB IT LI NL SE**

(71) Anmelder: **Heinrich Braukmann Armaturenfabrik GmbH,**
**D-6950 Mosbach/Baden (DE)**

(72) Erfinder: **Vollmer, Rudolf, Friedrich-Hölderlin-Str. 23,**
**D-6950 Mosbach (DE)**

(74) Vertreter: **Schmid, Berthold et al, Patentanwälte**
**Dipl.-Ing. B. Schmid Dr. Ing. G. Birn**
**Falbenhennenstrasse 17, D-7000 Stuttgart 1 (DE)**

(54) **Thermostatventil, insbes. thermostatisches Heizkörperventil.**

(57) Das meist im Einstellorgan (6) eines Thermostatventils untergebrachte thermostatische Arbeitselement (7) wird von der Raumluft beeinflußt. Eine Erhöhung der Raumlufttemperatur führt zu einem Schließen des Ventils. Zusätzlich wird das thermostatische Arbeitselement (7) aber auch vom Heizmedium beeinflußt, wobei sich eine Erhöhung des letzteren in einer zusätzlichen Schließbewegung des Ventil-Verschlußorgans (21) äußert. Insgesamt wird das Ventil infolgedessen stärker geschlossen als es durch die Temperaturerhöhung der Luft gerechtfertigt ist.

Durch den Einbau eines zusätzlichen, ebenfalls den Öffnungsgrad des Ventils beeinflussenden, jedoch dem Heizmittel ausgesetzten Arbeitselement (23, 24), dessen Arbeitsbewegung bei gleichgerichteter Temperaturänderung derjenigen des Raumluft-Arbeitselements (7) entgegengesetzt ist, läßt sich der ungünstige Einfluß des Heizmittels am thermostatischen Arbeitselement (7) im Einstellorgan (6), zumindest weitgehend, kompensieren. Das zusätzliche Arbeitselement (23) kann entweder durch ein Bimetallelement (28) oder ein Ausdehnungsglied (30) gebildet sein, wobei der Ausdehnungskoeffizient des letzteren größer ist als derjenige zumindest der Ventilspindel (15).

0027933

Firma

Heinrich Braukmann

Armaturenfabrik GmbH

6950 Mosbach/Baden

Thermostatventil, insbesondere thermostatisches Heizkörperventil

Die Erfindung bezieht sich auf ein Thermostatventil, insbesondere thermostatisches Heizkörperventil, mit einem der Raumluft ausgesetzten, thermostatischen Arbeitselement. Derartige Ventile sind insbesondere in Form von thermostatisch geregelten Heizkörperventilen seit langem bekannt und sehr zahlreich in Gebrauch. Im Hinblick auf die zunehmende Energieverknappung kommt ihnen immer größere Bedeutung zu. Thermostatisch geregelte Heizkörperventile gewährleisten die Einhaltung der eingestellten Temperatur in dem

- 2 -

den damit ausgestatteten Heizkörper enthaltenden Raum. Auf diese Weise ist es möglich, mit ein und derselben Heizungsanlage in verschiedenen Räumen unterschiedliche Temperaturen zu halten. Das thermostatische Arbeitselement, vielfach auch Temperaturweggeber genannt, befindet sich bei modernen Konstruktionen im Betätigungsgriff, der zu diesem Zwecke mit Lüftungsschlitzen ausgestattet ist. Diese gewährleisten, daß die Raumluft am Arbeitselement vorbeiströmen kann. Nun hat sich aber gezeigt, daß das thermostatische Arbeitselement nicht nur von der Raumluft, sondern auch vom Heizmittel, im Falle einer Raumheizung also vom Heizungswasser od. dgl., beeinflußt wird. Wenn die Heizmitteltemperatur konstant bleibt, kann dieser Einfluß durch die entsprechende Justage berücksichtigt werden. Wird aber, was weit häufiger der Fall ist, die Heizmitteltemperatur entsprechend der jeweiligen Außentemperatur vorgeregelt, soführt dies zu dem nachteiligen Effekt, daß durch den Heizmitteltemperatureinfluß mit steigender Heizmitteltemperatur das Ventil stärker geschlossen wird und damit nicht mehr die volle Heizleistung erbracht wird, was ein Nachregeln von Hand erforderlich macht.

Die Aufgabe der Erfindung besteht infolgedessen darin, ein Thermostatventil, insbesondere thermostatisches Heizkörperventil der eingangs genannten Art zu schaffen, welches von der Temperatur des Heizmittels nicht oder zumindest weit weniger beeinflußt werden kann als dies bislang der Fall ist.

Zur Lösung dieser Aufgabe wird erfingungsgemäß vorgeschlagen, daß das Thermostatventil, insbesondere thermostatisches Heizkörperventil, mit einem der Raumluft ausgesetzten thermostatischen Arbeitselement entsprechend dem kennzeichnenden Teil des ersten Anspruchs ausgebildet ist. Wenn nun die Temperatur des Heizmittels ansteigt und sich infolgedessen auch das Ventil erwärmt, was zu der erläuterten unerwünschten Schließbewegung des Ventil-Verschlußorgans führt, wird auch das zusätzliche Arbeitselement dieser Temperaturerhöhung ausgesetzt. Letztere bewirkt selbstverständlich auch eine Arbeitsbewegung des zusätzlichen Arbeitselements, jedoch ist diese erfindungsgemäß der Arbeitsbewegung des der Raumluft ausgesetzten thermostatischen Arbeitselements entgegengerichtet, so daß die von letzterem vorgenommene Schließbewegung des Ventil-Verschlußorgangs von der Öffnungsbewegung des zusätzlichen Arbeitselements kompensiert wird. Es hängt nun von der Ausbildung der beiden Arbeitselemente, ihrem Steuerungsverhalten und dem Grad der Temperaturänderung sowie einigen weiteren Faktoren ab, ob diese entgegengerichteten Regelbewegungen genau oder nur annähernd gleich groß ausfallen. Eine Kompensation der unerwünschten Schließbewegung findet aber auf jeden Fall statt und insofern zeigt dieses Thermostatventil ein weit vorteilhafteres Verhalten bei Temperaturänderungen als die vorbekannten.

Eine bevorzugte Variante der Erfindung sieht vor, daß das zusätzliche Arbeitselement durch wenigstens ein Bimetallelement
gebildet ist. Es muß so geformt, dimensioniert und angebracht
werden, daß es die erwähnte gegenläufige Arbeitsbewegung in
der notwendigen Größe bewirkt. Dasselbe gilt für eine andere
bevorzugte Ausführungsform der Erfindung, welche darin besteht,
daß das zusätzliche Arbeitselement durch ein Ausdehnungsglied
gebildet ist, dessen Ausdehnungskoeffizient größer ist als derjenige zumindest der Ventilspindel und Ventilgehäuse. Die beiden
letzteren dehnen sich bei einer Temperaturerhöhung selbstverständlich auch aus, jedoch soll diese Ausdehnung geringer sein als
diejenige des zusätzlichen Arbeitselements, so daß bei einer
Temperaturerhöhung insgesamt noch eine für Regelzwecke ausnutzbare Differenz der Längenänderungen verbleibt.

In Weiterbildung der Erfindung wird vorgeschlagen, daß das
Ventil-Verschlußorgan verschiebbar an der Ventilspindel gelagert ist und beide über wenigstens ein Bimetallelement miteinander gekuppelt sind. Man bildet dabei das Bimetallelement zweckmäßigerweise so aus, daß es seine Länge bei einer Temperaturerhöhung verkürzt und sich dadurch das Ventil-Verschlußorgan vom Ventilsitz entfernen und gegen das Betätigungselement des Thermostatventils bzw. das Raumluft-Arbeitselement hin verlagern kann. Dabei ist es besonders vorteilhaft, wenn das oder die Bimetallelemente eine ringförmige, insbesondere tellerfederförmige Gestalt besitzen und sie von der Ventilspindel durchsetzt sind, wobei sich das bzw. das oberste Bimetallelement mit seinem Innenrand an einem Bund od. dgl. der Ventilspindel abstützt, während das bzw. das unterste Bimetallelement mit seinem Außenrand am VentilVerschlußorgan aufliegt oder jeweils befestigt ist. Dieses zusätzliche Arbeitselement befindet sich demnach zwischen dem Raumluft-Arbeitselement und dem Ventil-Verschlußorgan, welches vorzugsweise dem inneren Spindelende zugeordnet ist. Aufgrund seiner Form erfährt es bei einer Temperaturerhöhung eine Verkürzung seiner wirksamen Länge. Im Falle einer tellerfederförmigen Gestalt nähert sich letztere bei ansteigender Temperatur immer mehr einem flachen Ring.

Bei der anderen Variante besteht eine weitere Ausgestaltung der Erfindung darin, daß die Ventilspindel mit dem Ventil-Verschlußorgan über das Ausdehnungsglied verbunden ist, welches sich zumindest weitgehend seitlich neben der Ventilspindel befindet. Aufgrund der seitlichen Anordnung des Ausdehnungsglieds neben der Ventilspindel läßt sich die verstärkte Längenausdehnung des ersteren gegenüber dem letzteren im Sinne einer Öffnungsbewegung des Ventils ausnutzen. Eine vorteilhafte Weiterbildung der Erfindung besteht darin, daß das Ausdehnungsglied eine hülsenförmige Gestalt besitzt und das zugeordnete Ende der Ventilspindel umgibt, wobei die Spindel mit dem einen und das Ventil-Verschlußorgan mit dem anderen Ende der Hülse verbunden ist. Die Verbindung muß nicht notwendigerweise fest oder gar unlösbar sein, vielmehr reicht es vollkommen aus, wenn die betreffenden Teile kraftschlüssig zusammengehalten werden. Die hülsenförmige Gestalt bietet sich schon deshalb an, weil in der Regel auch der Ventilsitz rohrförmig ausgebildet ist und das Hülseninnere die Aufnahme zumindest des zugeordneten Teils der Ventilspindel gestattet. Damit sind auch in strömungstechnischer Hinsicht keine Nachteile zu erwarten.

Eine weitere zweckmäßige Ausbildung der Erfindung sieht vor, daß das eine Hülsenende durch einen Boden verschlossen ist, und das freie Ende der Ventilspindel mittels einer hierzu konzentrisch angeordneten Druckfeder gegen die Bodeninnenseite gepreßt ist, die sich mit ihrem anderen Federende am Ventil-Verschlußorgan abstützt. Demnach kann die Hülse außer dem zugeordneten Teil, insbesondere Ende, der Ventilspindel auch noch eine Druckfeder aufnehmen, welche die kraftschlüssige Verbindung
zwischen der Hülse bzw. dem Hülsenboden und der Ventilspindel
herstellt und sichert. Dabei ist es von besonderem Vorteil,
wenn das hülsenförmige Ausdehnungsglied einstückig mit dem
Ventil-Verschlußorgan gefertigt ist und damit sowohl eine
strömungstechnisch günstige Form als auch niedere Herstellungskosten ermöglicht.

Eine andere Ausgestaltung der Erfindung sieht vor, daß der
Ventilsitz an einem hülsenförmigen, als Ausdehnungsglied ausgebildeten Gehäuseteil befestigt ist, dessen Ausdehnungskoeffizient größer ist als derjenige zumindest von Ventilspindel und Ventilgehäuse. In diesem Falle bewirkt eine
Temperaturerhöhung des Heizmittels keine vom Ventilsitz
weggerichtete Bewegung des Verschlußorgans, sondern ein
Wegwandern des Ventilsitzes vom Verschlußorgan, was in
gleicher Weise zu einer Öffnung des Ventils führt. Dabei
muß selbstverständlich die Anordnung sinngemäß zu derjenigen
der vorbeschriebenen Variante der Erfindung getroffen werden,
um die Differenz der Längenänderungen in dem beschriebenen
Sinne zu Regelzwecken ausnutzen zu können.

In der Zeichnung sind zwei Ausführungsbeispiele der Erfindung
teilweise schematisch anhand von vertikalen Längsmittelschnitten
dargestellt.

- 8 -

Das Gehäuse 1 besitzt einen abgebrochen dargestellten Zulaufstutzten 2 und Ablaufstutzen 3, die im Falle eines
Durchgangventils koaxial angeordnet sind, um das Thermostatventil in einen geraden Leitungsstrang einsetzen zu können.
Am oberen Gehäuseende 4 wird mittels einer Überwurfverschraubung das Einstellorgan 6 mit dem thermostatischen Arbeitselement 7 abnehmbar befestigt. Damit die Luft an letzteren
vorbeistreichen kann, besitzt es vorzugsweise gleichmäßig am
Umfang verteilte Luftschlitze 8.

Das thermostatische Arbeitselement 7 besteht vorzugsweise
aus einem insbesondere mit einem Ausdehnungsmedium, beispielsweise Wachs, gefüllten Gehäuse, dessen Bund 9 sich an einer
inneren ringförmigen Wand 1o des Einstellorgans 6 abstützt
und mit Hilfe einer Schraubendruckfeder 11 dagegen gepreßt
wird. Der Arbeitskolben 12 wird bei einer Temperaturerhöhung
der Raumluft im Sinne des Pfeils 13 ausgefahren. Er stützt
sich, insbesondere über ein Zwischenglied 14, am zugeordneten
Ende der Ventilspindel 15 ab. Das Zwischenglied 14 besteht
vorzugsweise aus Kunststoff und es kann durch entsprechende
Rippen 16 od. dgl. des Einstellorgans 6 zentriert werden.

An einem Bund oder Sprengring 17 der Ventilspindel 15 stützt
sich, insbesondere unter Zwischenschaltung einer Ringscheibe,
eine

- 9 -

Schraubendruckfeder 18 ab, welche die Ventilspindel konzentrisch umgibt. Ihr unteres Ende liegt an der Gehäusewand 19 auf, durch welche die Ventilspindel 15 dichtend hindurchgeführt ist. Der Ventilsitz 20 kann bei einem Gußgehäuse an dieses angeformt oder separat gefertigt und eingesetzt werden. Das Ventil-Verschlußorgan 21 ist bei beiden Ausführungsformen als Ventilteller ausgebildet. Das Heizmittel, also beispielsweise Heizungswasser, strömt dem Thermostatventil vorzugsweise in Richtung des Pfeils 22 zu, so daß der Vordruck an der Unterseite des Ventilverschlußorgans 21 ansteht.

Erfindungsgemäß ist dieses Thermostatventil mit einem zusätzlichen, ebenso wie das thermostatische Arbeitselement 7 den Öffnungsgrad des Ventils beeinflussenden, jedoch dem Heizmittel, also beispielsweise dem Heizungswasser, ausgesetzten Arbeitslement 23 bzw. 24 ausgestattet. Die Arbeitsbewegung des zusätzlichen Arbeitselements 23 bzw. 24 ist, wenn man gleichgerichtete Temperaturänderungen der Luft und des Heizmittels zugrunde legt, derjenigen des Raumluft-Arbeitselements 7 entgegengesetzt. Wenn sich also die Raumtemperatur erhöht, so bewirkt das, ausgehend von einer vorbestimmten Öffnungsstellung des Ventils, ein Ausfahren des Arbeitskolbens 12 des thermostatischen Arbeitselements 7 und damit eine Bewegung des Ventil-Verschlußorgans 21 in Schließrichtung. Demgegenüber hat eine Erwärmung

- 10 -

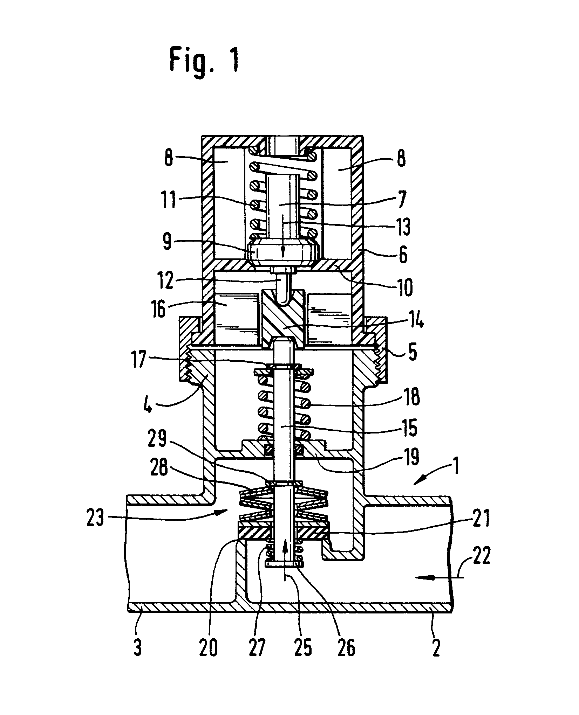

des Heizmittels, also beispielsweise des Heizwassers, eine
Verkürzung der wirksamen Länge des zusätzlichen Arbeitselements 23 (Figur 1) zur Folge, so daß sich das Ventil-Verschlußorgan 21 im Sinne des Pfeils 25 entlang der Ventilspindel
15 nach oben bewegt, was einer Öffnung des Ventils entspricht.
Dadurch lassen sich ungünstige Auswirkungen einer Temperaturveränderung des Heizmittels auf das thermostatische Arbeitselement 7 wenigstens teilweise kompensieren. Gegebenenfalls
kann man zwischen einen Bund 26 am freien inneren Ende der
Ventilspindel 15 und das Ventil-Verschlußorgan 21 noch eine
Schraubendruckfeder 27 schalten, wie dies die linke Bildhälfte
der Figur 1 als alternative Ausgestaltung zeigt.

Beim Ausführungsbeispiel gemäß Figur 1 besteht das zusätzliche
Arbeitselement 23 aus wenigstens einem vorzugsweise aber drei
tellerfederförmigen Bimetallelementen 28. Dort stützt sich das
oberste mit seinem kleineren Durchmesser an einem Bund 29 oder
Sprengring der Ventilspindel ab, während der Außenrand des
untersten Bimetallelements 28 an der Oberseite des tellerförmigen Ventil-Verschlußorgans 21 aufliegt. Eine Temperaturerhöhung des Heizmittels bewirkt eine Verkürzung der Höhe
jedes Bimetallelements und damit des gesamten Pakets.

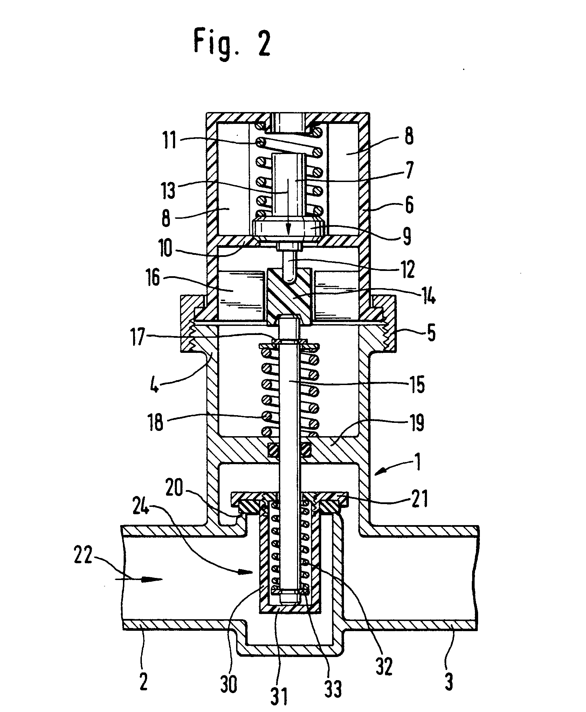

Beim zweiten Ausführungsbeispiel (Figur 2) besteht das zusätzliche Arbeitselement 24 aus einer Hülse 30, welche das innere, in der Zeichnung untere Ende der Ventilspindel 15 konzentrisch umgibt. Diese Hülse stellt ein Ausdehnungsglied dar, dessen Ausdehnungskoeffizient größer ist als derjenige zumindest von Ventilspindel 15 und Gehäuse. Da sich diese Hülse seitlich der Ventilspindel und nicht in Verlängerung von dieser befindet, bewirkt demnach eine Temperaturerhöhung von Hülse 30 und Ventilspindel 15 ausgehend von der in Figur 2 gezeigten Stellung aufgrund der unterschiedlich starken Verlängerung dieser beiden Elemente ein Anheben des Ventil-Verschlußorgans 21 und damit ein Öffnen des Ventils. Dementsprechendes gilt natürlich auch wenn sich das Ventil bereits in einer Offenstellung befindet.

Das eine in der Zeichnung untere Hülsenende ist durch einen Boden 31 verschlossen, welcher einstückig mit der Hülse und vorzugsweise auch mit dem Ventilteller hergestellt ist, der sich am anderen bzw. oberen Ende der Hülse befindet. Dabei durchsetzt die Ventilspindel 15 eine zentrische Bohrung des Ventil-Verschlußorgans bzw. Ventiltellers und stützt sich mit ihrem vom thermostatischen Arbeitselement 7 wegweisenden unteren Ende an der Innenseite des Bodens 31 ab. Man erreicht dieses Anliegen insbesondere mit Hilfe einer zwischen Hülse und Ventilspindel angeordneten Schraubendruckfeder 32 deren oberes Ende am Ventil-Verschlußorgan und deren unteres Ende an einem weiteren Bund 33 od. Sprengring der Ventilspindel 15 abgestützt ist.

A n s p r ü c h e

1. Thermostatventil, insbesondere thermostatisches Heizkörperventil, mit einem der Raumluft ausgesetzten thermostatischen Arbeitselement, gekennzeichnet durch ein zusätzliches, ebenfalls den Öffnungsgrad des Ventils beeinflussendes, dem Heizmittel ausgesetzten Arbeitselement (23, 24),
dessen Arbeitsbewegung bei gleichgerichteter Temperaturänderung derjenigen des RaumluftArbeitselements (7) entgegengesetzt ist.

2. Thermostatventil nach Anspruch 1, dadurch gekennzeichnet,
daß das zusätzliche Arbeitselement (23) durch wenigstens ein
Bimetallelement (28) gebildet ist.

3. Thermostatventil nach Anspruch 1, dadurch gekennzeichnet,
daß das zusätzliche Arbeitselement (24) durch ein Ausdehnungsglied (3o) gebildet ist, dessen Ausdehnungskoeffizient größer ist
als derjenige zumindest der Ventilspindel (15).

4. Thermostatventil nach Anspruch 1 oder 2, dadurch gekennzeichnet, daß das Ventil-Verschlußorgan (21) verschiebbar an der
Ventilspindel (15) gelagert ist und beide über wenigstens ein Bimetallelement (28) miteinander gekuppelt sind.

0027933

5. Thermostatventil nach Anspruch 4, dadurch gekennzeichnet, daß das oder die Bimetallelemente (28) eine ringförmige, insbesondere tellerfederförmige Gestalt besitzen und sie von der Ventilspindel (15) durchsetzt sind, wobei sich das bzw. das oberste Bimetallelement mit seinem Innenrand an einem Bund (29) der Ventilspindel (15) abstützt, während das bzw. das unterste Bimetallelement mit seinem Außenrand am Ventil-Verschlußorgan (21) aufliegt oder jeweils befestigt ist.

6. Thermostatventil nach Anspruch 1 oder 3, dadurch gekennzeichnet, daß die Ventilspindel (15) mit dem Ventilverschlußorgan (21) über das Ausdehnungsglied (30) verbunden ist, welches sich zumindest weitgehend seitlich neben der Ventilspindel befindet.

7. Thermostatventil nach Anspruch 6, dadurch gekennzeichnet, daß das Ausdehnungsglied (30) eine hülsenförmige Gestalt besitzt und das zugeordnete Ende der Ventilspindel (15) umgibt, wobei die Spindel mit dem einen und das Ventil-Verschlußorgan (21)' mit dem anderen Ende der Hülse verbunden ist.

8. Thermostatventil nach Anspruch 7, dadurch gekennzeichnet, daß das eine Hülsenende durch einen Boden (31) verschlossen ist, und das freie Ende der Ventilspindel (15) mittels einer hierzu konzentrisch angeordneten Drückfeder (32) gegen die Bodeninnenseite gepreßt ist, die sich mit ihrem anderen Federende am Ventil-
Verschlußorgan (21) abstützt.

9.    Thermostatventil nach Anspruch 7 oder 8, dadurch gekennzeichnet,
daß das hülsenförmige Ausdehnungsglied (3o) einstückig mit dem
Ventil-Verschlußorgan (21) gefertigt ist.

1o.    Thermostatventil nach Anspruch 3, dadurch gekennzeichnet,
daß der Ventilsitz (2o) an einem hülsenförmigen, als Ausdehnungsglied ausgebildeten Gehäuseteil befestigt ist, dessen Ausdehnungskoeffizient größer ist als derjenige zumindest von Ventilspindel
(15) und Ventilgehäuse (1).

Fig. 1

# Fig. 2

Europäisches
Patentamt

**EUROPÄISCHER RECHERCHENBERICHT**

0027933

Nummer der Anmeldung

EP 80 10 6131

| Kategorie | Kennzeichnung des Dokuments mit Angabe, soweit erforderlich, der maßgeblichen Teile | betrifft Anspruch |
|---|---|---|
| | | |
| | GB - A - 785 618 (THE BRITISH THERMOSTAT) | 1,2,4, 6 |
| | * Seite 1, Zeilen 20-47; Seite 2, Zeile 114 bis Seite 3, Zeile 107; Abbildung * | |
| | -- | |
| | DE - B - 1 197 707 (DANFOSS) | 1 |
| | * Spalte 1, Zeilen 1-17, 41-50 * | |
| | -- | |
| | US - A - 2 123 283 (G. KRONMILLER) | 1,5 |
| | * Seite 2, linke Spalte, Zeile 20 bis rechte Spalte, Zeile 42; Seite 4, linke Spalte, Zeilen 1-37; Abbildungen 1,2 * | |
| | -- | |
| A | US - A - 2 150 941 (B. RANDEL) | 1 |
| | * Seite 1, rechte Spalte, Zeilen 12-52; Abbildung 1 * | |
| | -- | |
| A | US - A - 2 154 030 (I. BRUMBAUGH) | 1 |
| | * Seite 1, linke Spalte, Zeilen 11-34; Seite 3, rechte Spalte, Zeile 53 bis Seite 4, rechte Spalte, Zeile 29; Abbildung 5 * | |
| | ---- | |

**KLASSIFIKATION DER ANMELDUNG (Int. Cl.3)**

G 05 D 23/02

**RECHERCHIERTE SACHGEBIETE (Int. Cl.3)**

G 05 D
F 16 K

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-01-1981 | V. HELOT |

EPA form 1503.1 06.78